# EUROPEAN PATENT APPLICATION

(11) **EP 4 810 297 A1**
(43) Date of publication of application: **23.09.2026**
(21) Application number: 25224258.1
(22) Date of filing: 17.12.2025
(51) Int. Cl.: B60L 3/00, B60L 3/04, B60L 15/22, B60L 15/26, B60L 50/60, B60L 58/10

(54) **SWITCH CONTROL APPARATUS INCLUDING SWITCH CONTROL CIRCUIT AND POWER SUPPLY APPARATUS INCLUDING SWITCH CONTROL CIRCUIT**

(30) Priority: 18.03.2025 KR 20250034620
(71) Applicant: SAMSUNG SDI CO., LTD., Yongin-si, Gyeonggi-do 17084 (KR)
(72) Inventor: KIM, Sungjung, 17084 Yongin-si (KR)
(74) Representative: Maiwald GmbH

(57) **Abstract**

A switch control apparatus includes: a controller configured to generate a safety signal, an enable signal, and a first reset signal; a timer circuit configured to receive the safety signal, to further receive the first reset signal via a first node, and to generate a second reset signal; and a latch circuit configured to receive each of the safety signal and the enable signal, to further receive a third reset signal based on at least one of the first reset signal or the second reset signal via a second node, and to generate a retain signal, wherein in the switch control apparatus, a first path including the first node, the timer circuit, and the second node, and a second path including the first node and the second node are formed, and the second path is different from the first path.

## Description

### BACKGROUND

### 1. Field

Aspects of some embodiments of the present disclosure relate to a switch control apparatus including a switch control circuit and a power supply apparatus including the switch control circuit.

### 2. Description of the Related Art

Electrical connectors and the like are employed as switches for controlling the electrical connection between a power source and a load. For example, in electric vehicles (EVs) and hybrid electric vehicles (HEVs), a high-voltage battery pack may be configured with a plurality of secondary batteries to drive a motor, and power may be supplied from the battery pack to the motor via an electrical connector.

The growing adoption of high-capacity battery packs has led to increased consumer demand for safe and stable power supply systems, as well as for technologies that guarantee the reliable operation of switch control circuits to ensure the safety of the power supply systems.

The above information disclosed in this Background section is only for enhancement of understanding of the background and therefore the information discussed in this Background section does not necessarily constitute prior art.

### SUMMARY

Aspects of some embodiments of the present disclosure include a switch control apparatus including a switch control circuit and a power supply apparatus including the switch control circuit. The characteristics of embodiments according to embodiments of the present disclosure are not limited to the characteristics mentioned above, and other characteristics of embodiments according to the present disclosure that are not specifically mentioned may be understood by the following description and more clearly understood by embodiments of the present disclosure. In addition, it will be appreciated that the characteristics of embodiments according to some embodiments the present disclosure may be implemented by aspects and combinations thereof defined in claims, and their equivalents.

According to an aspect, there is provided a switch control apparatus including a controller configured to generate a safety signal, an enable signal, and a first reset signal, a timer circuit configured to receive the safety signal, to further receive the first reset signal via a first node, and to generate a second reset signal, and a latch circuit configured to receive each of the safety signal and the enable signal, to further receive a third reset signal based on at least one of the first reset signal or the second reset signal via a second node, and to generate a retain signal, wherein in the switch control apparatus, a first path including the first node, the timer circuit, and the second node, and a second path including the first node and the second node are formed, and the second path is different from the first path.

According to some embodiments, the first path may include a first section that connects the first node to the timer circuit, and a second section that connects the timer circuit to the second node, wherein the second section may include a first diode configured to prevent the first reset signal from being input to the timer circuit.

According to some embodiments, the second path may include a second diode configured to prevent the second reset signal from being input to the first node.

According to some embodiments, the second node may include a first logic circuit configured to receive the first reset signal and the second reset signal, and to output the third reset signal.

According to some embodiments, the controller may include a main controller configured to generate the enable signal and the first reset signal, and an auxiliary controller configured to generate the safety signal based on a state of the main controller.

According to some embodiments, the first reset signal may cause the timer circuit to be set to a reset state, and the third reset signal may cause the latch circuit to be set to the reset state.

According to some embodiments, the timer circuit may be further configured to output the second reset signal at a point in time after a preset period of time has elapsed from a point in time at which the safety signal is received.

According to some embodiments, the latch circuit may provide a switch control apparatus that outputs a maintenance state signal from the time the safety signal is received to the time the third reset signal is received.

According to some embodiments, the switch control apparatus may further include a second logic circuit configured to receive the enable signal and the retain signal, and to output a control signal for controlling opening and closing of a switch.

According to some embodiments, the controller may be further configured to diagnose the switch control apparatus based on the retain signal.

According to an aspect, there is provided a power supply apparatus including a power source, a switch configured to electrically connect or disconnect the power source to or from at least one load, a controller configured to generate a safety signal, an enable signal, and a first reset signal, a timer circuit configured to receive the safety signal, to further receive the first reset signal via a first node, and to generate a second reset signal, a latch circuit configured to receive each of the safety signal and the enable signal, to further receive a third reset signal based on at least one of the first reset signal or the second reset signal via a second node, and to generate a retain signal, and a first logic circuit configured to receive the enable signal and the retain signal, and to output a control signal for controlling opening and closing of the switch, wherein in the power supply apparatus, a first path including the first node, the timer circuit, and the second node, and a second path including the first node and the second node are formed, and the second path is different from the first path.

According to some embodiments, the first path may include a first section that connects the first node to the timer circuit, and a second section that connects the timer circuit to the second node, wherein the second section may include a first diode configured to prevent the first reset signal from being input to the timer circuit.

According to some embodiments, the second path may include a second diode configured to prevent the second reset signal from being input to the first node.

According to some embodiments, the second node may include a second logic circuit configured to receive the first reset signal and the second reset signal, and to output the third reset signal.

According to some embodiments, the controller may include a main controller configured to generate the enable signal and the first reset signal, and an auxiliary controller configured to generate the safety signal based on a state of the main controller.

According to some embodiments, the first reset signal may cause the timer circuit to be set to a reset state, and the third reset signal may cause the latch circuit to be set to the reset state.

According to some embodiments, the timer circuit may be further configured to output the second reset signal at a point in time after a preset period of time has elapsed from a point in time at which the safety signal is received.

According to some embodiments, the latch circuit may be further configured to output the retain signal from a point in time at which the safety signal is received until a point in time at which the third reset signal is received.

According to some embodiments, the controller may be further configured to diagnose the power supply apparatus based on the retain signal.

Other aspects, features, and characteristics other than those described above will become apparent from the following drawings, claims, and detailed description of the disclosure.

### BRIEF DESCRIPTION OF THE DRAWINGS

The following drawings attached to this disclosure are provided to illustrate aspects of some embodiments according to the present disclosure and serve to further understand the technical idea of the present disclosure together with specific details for carrying out embodiments according to the present disclosure, and thus embodiments according to the present disclosure should not be interpreted as being limited only to the matters described in the drawings in which:
FIG. 1 is an example diagram for schematically illustrating aspects of a power supply system according to some embodiments;
FIG. 2 is an example diagram for illustrating further details of a controller according to some embodiments;
FIG. 3 is an example diagram for schematically illustrating further details of a switch control circuit;
FIG. 4 is a circuit diagram of a switch control circuit including a diode according to some embodiments;
FIG. 5 is a circuit diagram of a switch control circuit including a logic circuit configured to receive a first reset signal and a second reset signal according to some embodiments;
FIG. 6 is a circuit diagram of a switch control circuit including a logic circuit configured to receive an enable signal and a retain signal according to some embodiments;
FIG. 7 is a circuit diagram of a switch control circuit according to some embodiments;
FIG. 8 is an example diagram for illustrating aspects of a normal operation of the switch control circuit of FIG. 7; and
FIG. 9 is an example diagram for illustrating aspects of a diagnostic operation of the switch control circuit of FIG. 7.

### DETAILED DESCRIPTION

Aspects and features of embodiments according to the present disclosure, and methods of achieving the same will become more clear with reference to the detailed description of embodiments taken in conjunction with the accompanying drawings. The embodiments presented below are provided to complete the present disclosure and to fully inform those skilled in the art to which the present disclosure belongs. In explaining the present disclosure, if it is determined that a detailed description of a related known technology may obscure the gist of the present invention, the detailed description will be omitted.

Terms used herein are only used to describe particular embodiments, and are not intended to limit the present disclosure. Unless otherwise defined, all terms used herein have the same meaning as commonly understood by one having ordinary skill in the art to which the present disclosure belongs.

In the present specification, singular forms are intended to include plural forms as well, unless the context clearly indicates otherwise. Further, the terms "include" or "have" should be understood to be intended to designate that illustrated features, numbers, steps, operations, components, parts or combinations thereof exist and not to preclude the existence of one or more different features, numbers, steps, operations, components, parts or combinations thereof, or the possibility of the addition thereof.

In addition, terms including ordinal numbers such as " first " or " second " used herein may be used to describe various components, but the components should not be limited by the terms. These terms are used only for the purpose of distinguishing one component from another component.

Phrases such as "in an embodiment," "according to some embodiments", "relating to an embodiment," "according to an embodiment implementation," and the like appearing in various places in the present specification are not necessarily all referring to the same embodiment. Further, throughout the specification, "embodiment" is a random division for easily describing the disclosure in the present disclosure, and each embodiment need not be mutually exclusive. For example, configurations mentioned for the purpose of describing one embodiment may be applied and implemented in other embodiments and may be changed and applied and implemented without departing from the idea and scope of the present disclosure.

Some embodiments of the present disclosure may be represented by functional block configurations and various processing operations. Some or all of these functional blocks may be implemented by various numbers of hardware and/or software configurations that perform particular functions. For example, the functional blocks of the present disclosure may be implemented by one or more microprocessors or by circuit configurations for a certain function.

For example, the functional blocks of the present disclosure may be implemented in various programming or scripting languages. The functional blocks may be implemented by algorithms executed in one or more processors. In addition, the present disclosure may employ conventional techniques for electronic environment setting, signal processing, and/or data processing. Terms such as "mechanism," "element," "means," and "configuration" can be used broadly and are not limited to mechanical and physical configurations. In addition, terms such as "unit," "-or/-er," and "module" denote a unit that processes at least one function or operation, which may be implemented in hardware or software, or implemented in a combination of hardware and software.

In addition, a connection line or a connection member between components shown in the drawings is merely a functional connection and/or a physical or circuit connection. In an actual device, connections between components may be represented by various functional connections, physical connections, or circuit connections that are replaceable or added.

In addition, some components in the drawings may be shown to be exaggerated in size or proportion. Moreover, components shown in one drawing may not be shown in other drawings.

Hereinafter, aspects of some embodiments of the present disclosure will be described in more detail with reference to the accompanying drawings.

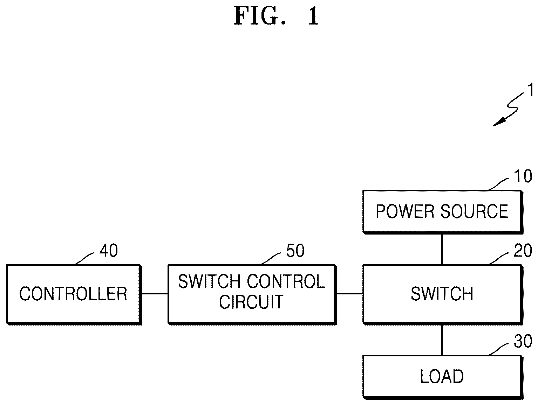

FIG. 1 is an example diagram for schematically illustrating aspects of a power supply system according to some embodiments.

Referring to FIG. 1, a power supply system 1 may include a power source 10, a switch 20, a load 30, a controller 40, and a switch control circuit 50. The power supply system 1 according to some embodiments may be applied to various devices such as electric vehicles (EVs), hybrid electric vehicles (HEVs), electric bicycles (E-Bikes), power tools, energy storage systems (ESS), uninterruptible power supplies (UPS), portable computers, mobile phones, portable audio devices, and/or portable video devices, but embodiments according to the present disclosure are not limited thereto.

According to some embodiments, the switch 20 is connected between the power source 10 and the load 30, and provides or interrupts an electrical connection between the power source 10 and the load 30. In an ON (closed) state, the switch 20 electrically connects the power source 10 to the load 30, and in an OFF (open) state, the switch 20 electrically disconnects the power source 10 from the load 30.

According to some embodiments, the power source 10 may include a battery pack configured as a single unit by connecting a plurality of battery cells. According to some embodiments, the load 30 may include a motor that provides a rotational force using power supplied from the power source 10, or a power conversion circuit that converts power supplied from the power source 10 into power required by various circuit components, but embodiments according to the present disclosure are not limited thereto.

The switch 20 according to some embodiments may include a physical switch or a relay that physically controls an electrical connection. For example, the switch 20 may include a magnetic contactor (MC) whose opening and closing operations are controlled by an electromagnet. The switch 20 according to some embodiments may include a field-effect transistor that controls an electrical connection through a gate voltage. According to some embodiments, at least one switch 20 may be provided between the power source 10 and the load 30 to ensure stable and safe power supply to the load 30.

In the present disclosure, a power supply apparatus refers to a device that supplies power to the load 30. According to some embodiments, the power supply apparatus may include the power source 10 and a switch control apparatus. The power supply apparatus may include a plurality of components used to supply power to the load 30. The power supply apparatus may include a battery pack equipped with a battery management system (BMS), a power bank for a portable electronic device, or the like, but embodiments according to the present disclosure are not limited thereto.

In the present disclosure, the switch control apparatus refers to a device that manages and controls the state of the switch 20. According to some embodiments, the switch control apparatus may include the controller 40 and the switch control circuit 50. In the present disclosure, the controller 40 refers to at least one electronic device that controls the switch control circuit 50. The controller 40 according to some embodiments may control the switch control circuit 50 by generating at least one signal.

According to some embodiments, the switch control apparatus may control the state of the switch 20 to an ON state or an OFF state. For example, the switch control apparatus may apply a control signal to a switch driver for the switch 20 to control the state of the switch 20 to either an ON or OFF state, and the switch driver may control the switch 20 so that the switch 20 has a state corresponding to the control signal. According to some embodiments, the switch driver may be included on the side of the switch control circuit 50 or on the side of the switch 20, as shown in FIG. 1.

According to some embodiments, the switch control apparatus may include a battery management system for the power source 10, which is implemented as a battery pack. The switch control apparatus may generate a control signal for controlling the switch 20 based on the state of the power source 10, the switch control apparatus, or the load 30.

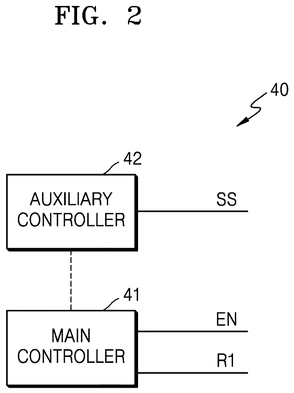

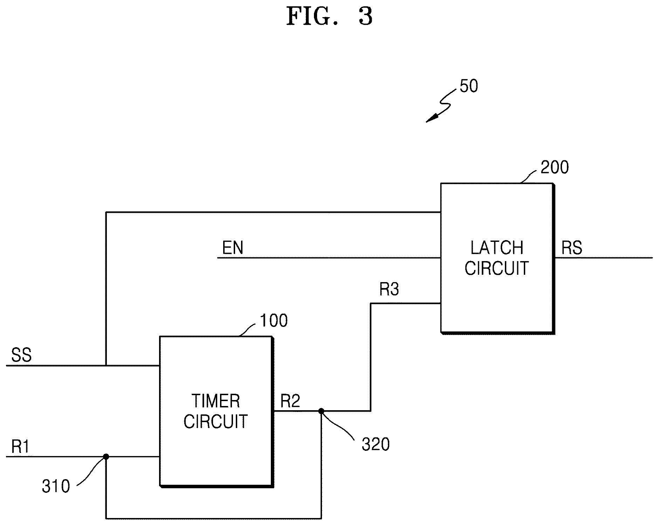

Hereinafter, with reference to FIG. 2, a some implementation examples of the controller 40 according to some embodiments will be described in more detail, and with reference to FIG. 3, some implementation examples of the switch control circuit 50 according to some embodiments will be described in more detail.

FIG. 2 is an example diagram for describing further details the controller according to some embodiments.

Referring to FIG. 2, the controller 40 may generate a safety signal SS, an enable signal EN, and a first reset signal R1.

According to some embodiments, the controller 40 may include at least one memory and at least one processor. The memory is hardware that stores various types of data processed within the controller 40, and may store programs for performing various operations, processing, and control by the at least one processor.

For example, the memory may include a random access memory (RAM) such as a dynamic random access memory (DRAM) or a static random access memory (SRAM), a read-only memory (ROM), and an electrically erasable programmable read-only memory (EEPROM), a CD-ROM, Blu-ray or other optical disk storage, a hard disk drive (HDD), a solid state drive (SSD), or flash memory.

The processor controls overall operations of the controller 40. For example, the processor may control the overall operations of the controller 40 by executing programs stored in the memory. For example, the processor may control the controller 40 to generate at least one of the safety signal SS, the enable signal EN, or the first reset signal R1 by determining whether respective signal generation conditions are satisfied.

The processor may be implemented by using at least one of an application specific integrated circuit (ASIC), a digital signal processor (DSP), a digital signal processing device (DSPD), a programmable logic device (PLD), a field programmable gate array (FPGA), a controller, a micro-controller, a microprocessor, or an electric unit for performing other functions.

According to some embodiments, the safety signal SS is a signal generated by the controller 40 to ensure safe operation of the switch 20, and may be generated when a potential hazard or abnormal condition is detected.

According to some embodiments, the controller 40 may generate the safety signal SS when a potential hazard or abnormal condition is detected in the controller 40. For example, the controller 40 may generate the safety signal SS when an abnormal condition is detected, such as when at least a part of the controller 40 experiences a fault or when at least a part of the controller 40 is reset.

According to some embodiments, the controller 40 may artificially generate the safety signal SS for diagnosis of the switch control circuit 50, even when no potential hazard or abnormal condition is detected in the controller 40.

According to some embodiments, the enable signal EN is a signal that instructs the switch driver to operate, and may be generated when the controller 40 directly controls the operation of the switch 20.

According to some embodiments, the controller 40 may generate the enable signal EN continuously to maintain the switch 20 in the ON state. According to some embodiments, when an abnormal condition occurs, such as when at least a part of the controller 40 experiences a fault or is reset, the enable signal EN may not be normally generated and transmitted.

According to some embodiments, the first reset signal R1 refers to a signal for directly or indirectly resetting at least some of the components of the switch control circuit 50. According to some embodiments, some implementation examples of the switch control circuit 50 that is directly or indirectly reset by the first reset signal R1 will be described below with reference to FIG. 3.

According to some embodiments, the controller 40 may include a main controller 41 that generates the enable signal EN and the first reset signal R1, and an auxiliary controller 42 that generates the safety signal SS based on the state of the main controller 41. According to some embodiments, the main controller 41 and the auxiliary controller 42 may each be implemented to include at least one processor.

According to some embodiments, the auxiliary controller 42 may manage power supply to the main controller 41 and monitor the state of the main controller 41 by performing communication with the main controller 41.

According to some embodiments, by monitoring the state of the main controller 41, the auxiliary controller 42 may generate the safety signal SS when an abnormal condition or fault occurs in the main controller 41. For example, the auxiliary controller 42 may generate the safety signal SS when no response is received from the main controller 41 for a certain period of time or more, as monitored by a watchdog timer.

According to some embodiments, the main controller 41 may be implemented as a main control unit (MCU) of a battery management system, and the auxiliary controller 42 may be implemented as a system basis chip (SBC) for the MCU.

According to some embodiments, the safety signal SS, the enable signal EN, the first reset signal R1, and the like refer to signals each having two or more states. According to some embodiments, the reception of a signal by each component of the switch control circuit 50 may indicate the reception of the signal in a specific state among a first state and a second state. For example, the reception of a signal by each component of the switch control circuit 50 may indicate the reception of the signal in a state defined as an active state. In this case, the active state may indicate a signal state corresponding to a state in which a specific function of a specific component is actively performed or enabled.

As an example, the reception of the safety signal SS by a certain component constituting the switch control circuit 50 may indicate the reception of the safety signal SS in a first state, when the first state of the safety signal SS is defined as indicating the active state for the certain component.

In an example that does not conflict with the above-described example, the reception of the safety signal SS by another component constituting the switch control circuit 50 may indicate the reception of the safety signal SS in a second state, when the second state of the safety signal SS is defined as indicating the active state for the corresponding component.

FIG. 3 is an example diagram for schematically describing further details of the switch control circuit.

Referring to FIG. 3, the switch control circuit 50 according to some embodiments may include a timer circuit 100 and a latch circuit 200.

In the present disclosure, the timer circuit 100 refers to a circuit that outputs a specific signal after a time delay (e.g., a set or predetermined time delay) when a preset condition is satisfied. For example, the preset condition may include receiving a specific type of signal. The timer circuit 100 according to some embodiments may be implemented using at least one electronic element for implementing the above-described function of the timer circuit 100.

In the present disclosure, the latch circuit 200 refers to a circuit that stores an input signal (e.g., an input predetermined signal) or stores and maintains the state of the input signal (e.g., an input predetermined signal). For example, the latch circuit 200 may maintain the first state even after receiving a second state signal, subsequent to receiving a first state signal. The latch circuit 200 according to some embodiments may be implemented using at least one electronic element for implementing the above-described function of the latch circuit 200.

According to some embodiments, the switch control circuit 50 may include the timer circuit 100 configured to receive each of the safety signal SS and the first reset signal R1 and to generate a second reset signal R2. For example, the switch control circuit 50 may include the timer circuit 100 configured to receive the safety signal SS, to further receive the first reset signal R1 via a first node 310, and to generate the second reset signal R2.

In this case, the reception of the first reset signal R1 by the timer circuit 100 through the first node 310 may indicate that a path through which the first reset signal R1 is transmitted to the timer circuit 100 includes the first node 310.

The timer circuit 100 according to some embodiments may receive the safety signal SS generated by the controller 40 via a port corresponding to the safety signal SS, and may receive the first reset signal R1 generated by the controller 40 via a port corresponding to the first reset signal R1.

According to some embodiments, the timer circuit 100 may output the second reset signal R2 at a point in time after a preset period of time has elapsed from a point in time at which the safety signal SS is received. For example, the timer circuit 100 may receive the safety signal SS, and may output the second reset signal R2 via a port corresponding to the second reset signal R2 after a preset period of time (e.g., 3 seconds or the like) has elapsed from the point in time at which the safety signal SS is received.

According to some embodiments, the first reset signal R1 may set the timer circuit 100 to a reset state. In this case, the reset state of the timer circuit 100 may indicate that a count value of a timer, which is counting a certain period of time to generate the second reset signal R2, has been reset to zero. According to some embodiments, the reset state of the timer circuit 100 may indicate that all operations of the timer circuit 100 have been halted and the count value of the timer, which is in the middle of counting, has been reset to zero.

According to some embodiments, the timer circuit 100 may implement the timer function based on a discharge state of at least one capacitor. In this case, the timer circuit 100 may transition to the reset state by fully discharging the capacitor upon receiving the first reset signal R1.

According to some embodiments, the switch control circuit 50 may include the latch circuit 200 configured to receive each of the safety signal SS, the enable signal EN, and a third reset signal R3, and to generate a retain signal RS. The switch control circuit 50 may include the latch circuit 200 that is configured to receive each of the safety signal SS and the enable signal EN, to further receive, via a second node 320, the third reset signal R3 based on at least one of the first reset signal R1 or the second reset signal R2, to generate the retain signal RS.

In this case, the reception of the third reset signal R3 by the latch circuit 200 via the second node 320 may indicate that a path through which the third reset signal R3 is transmitted to the latch circuit 200 includes the second node 320.

The latch circuit 200 according to some embodiments may receive the safety signal SS generated by the controller 40 via a port corresponding to the safety signal SS, receive the enable signal EN generated by the controller 40 via a port corresponding to the enable signal EN, and receive the third reset signal R3 via a port corresponding to the third reset signal R3.

According to some embodiments, the latch circuit 200 may output the retain signal RS from the point in time at which the safety signal SS is received until a point in time at which the third reset signal R3 is received. For example, the latch circuit 200 may receive the safety signal SS, store the state of the enable signal EN at the point in time at which the safety signal SS is received, and output the retain signal RS via a port corresponding to the retain signal RS, wherein the retain signal RS remains identical to the stored state of the enable signal EN from the point in time at which the safety signal SS is received until the point in time at which the third reset signal R3 is received via the port corresponding to the third reset signal R3.

As an example, when the state of the enable signal EN at the point in time at which the safety signal SS is received indicates a first state corresponding to an ON state of the switch 20, the latch circuit 200 may output the retain signal RS indicating the first state corresponding to the ON state of the switch 20 from the point in time at which the safety signal SS is received until the point in time at which the latch circuit 200 receives the third reset signal R3, even when the state of the enable signal EN applied to the latch circuit 200 after the safety signal SS is received indicates a second state corresponding to an OFF state of the switch 20.

According to some embodiments, the third reset signal R3 may set the latch circuit 200 to a reset state. In this case, the reset state of the latch circuit 200 may indicate that the stored state of the enable signal EN has been completely cleared. According to some embodiments, the reset state of the latch circuit 200 may indicate that the latch circuit 200 has stopped outputting the retain signal RS and that the stored state of the enable signal EN has been completely cleared. According to some embodiments, the stopping of the output of the retain signal RS by the latch circuit 200 may include stopping the output of the retain signal RS in the first state and outputting the retain signal RS in the second state.

According to some embodiments, the latch circuit 200 may implement the function of the latch circuit 200 by including a D flip-flop. In this case, the latch circuit 200 may transition to the reset state by clearing data stored in the D flip-flop at the point in time at which the third reset signal R3 is received.

According to some embodiments, the switch control circuit 50, which includes the timer circuit 100 and the latch circuit 200, may control the switch 20 or the switch driver for the switch 20 so that the switch 20 is maintained in the same state as before, in the event of a temporary fault in the controller 40 that primarily controls the operation of the switch 20 through the enable signal EN.

According to some embodiments, the controller 40 may diagnose the switch control circuit 50 based on the retain signal RS. According to some embodiments, the controller 40 may diagnose the power supply apparatus including the switch control circuit 50 by diagnosing the switch control circuit 50 based on the retain signal RS.

For example, the controller 40 may set at least one component (e.g., the timer circuit 100 and the latch circuit 200) constituting the switch control circuit 50 to the reset state by applying the first reset signal R1, and may then apply the safety signal SS. Thereafter, the controller 40 may determine whether the switch control circuit 50 is operating normally by determining whether the retain signal RS is output at a scheduled point in time.

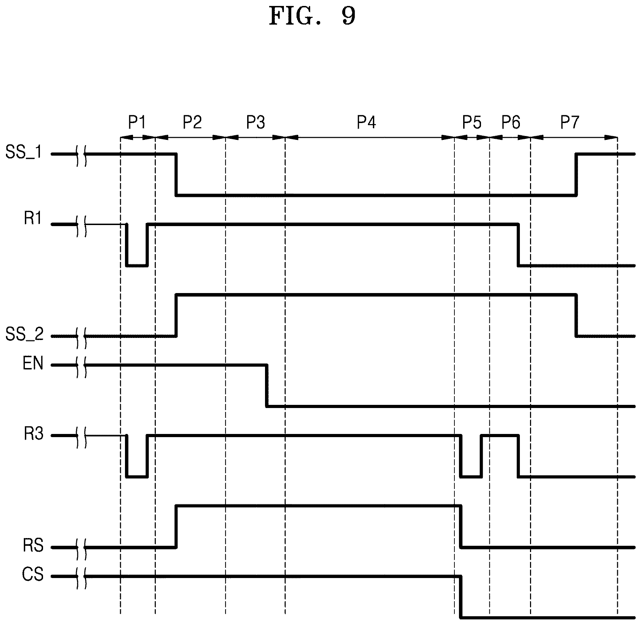

Example diagnostic operations of the switch control circuit 50 performed by the controller 40 will be described in more detail below with reference to FIG. 9.

According to some embodiments, in the switch control circuit 50, a first path including the first node 310, the timer circuit 100, and the second node 320, and a second path including the first node 310 and the second node 320 may be formed. In this case, the second path may be different from the first path.

For example, the second path may include the first node 310 and the second node 320, and may not include the timer circuit 100. At this time, the second path may represent a bypass path that does not pass through the timer circuit 100, in contrast to the first path.

Through this, the resetting of the latch circuit 200 may be performed not only through indirect control via the timer circuit 100, but also through direct control that does not pass through the timer circuit 100, thereby enabling safe diagnosis of the switch control circuit 50 by eliminating the possibility of an error occurring during the reset of the latch circuit 200.

According to the related art, because the resetting of the latch circuit 200 relied on a path that passed through the timer circuit 100, there was a problem in that the resetting of the latch circuit 200 was vulnerable to errors that could occur by passing through the timer circuit 100.

According to some embodiments of the present disclosure, by directly controlling the resetting of the latch circuit 200 based on a reset signal output from the controller 40, the possibility of errors occurring during the resetting of the latch circuit 200 can be eliminated, and the diagnosis of the switch control circuit 50 can be performed safely.

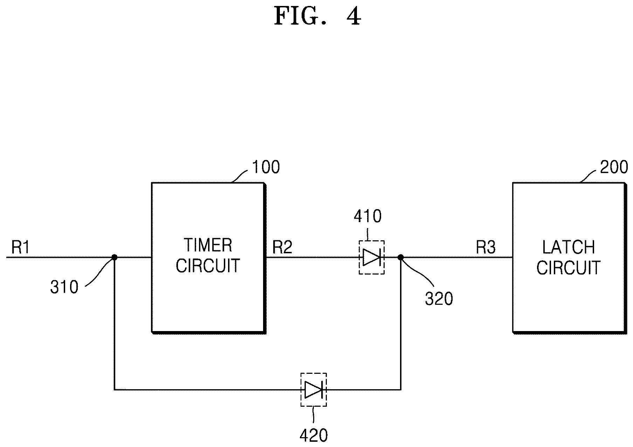

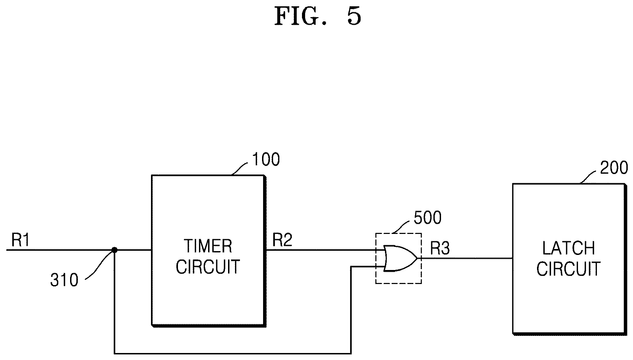

Hereinafter, aspects of some implementation examples of the switch control circuit 50 including the first path and the second path will be described in more detail with reference to FIGS. 4 and 5 and the like.

FIG. 4 is a circuit diagram of a switch control circuit including a diode according to some embodiments. FIG. 4 illustrates only components for describing a switch control circuit 50 including a diode according to some embodiments. The switch control circuit 50 illustrated in FIG. 4 may further include at least one component described above with reference to FIG. 3 or the like.

Referring to FIG. 4, in the switch control circuit 50 according to some embodiments, a first path including at least one diode 410 and a second path including at least one diode 420 may be formed.

According to some embodiments, the first path may include a first section connecting the first node 310 to the timer circuit 100 and a second section connecting the timer circuit 100 to the second node 320. That is, the first path may represent an electrical connection section from the first node 310 to the timer circuit 100, and the second path may represent an electrical connection section from the timer circuit 100 to the second node 320.

According to some embodiments, the second section of the first path may include the diode 410 configured to prevent the first reset signal R1 being input to the timer circuit 100. Through this, when the first reset signal R1 is applied from the controller 40 to the timer circuit 100 via the first node 310, the first reset signal R1, which is applied to the second node 320 via the second path, may be prevented from being applied to the timer circuit 100 via the second section.

According to some embodiments, the second path may include the diode 420 configured to prevent the second reset signal R2 from being input to the first node 310. Through this, when the second reset signal R2 is applied from the timer circuit 100 to the second node 320, the second reset signal R2, which is applied to the second node 320 via the second section, may be prevented from being applied to the first node via the second path.

According to some embodiments, the first reset signal R1 and the second reset signal R2 may each indicate a plurality of states, and each state may be distinguishable based on a voltage level of the corresponding signal. In this case, an active state of each signal may be defined as either high or low depending on a circuit design.

For example, when the active state of each of the first reset signal R1 and the second reset signal R2 is defined as a low state, directions in which the diodes 410 and 420 are provided may be the same as those shown in FIG. 4. According to some embodiments, it should be noted that when the active state of each of the first reset signal R1 and the second reset signal R2 is defined as a high state, the directions in which the diodes 410 and 420 are provided may be opposite to those shown in FIG. 4.

The latch circuit 200 according to some embodiments may receive the third reset signal R3 based on at least one of the first reset signal R1 or the second reset signal R2. For example, when the first reset signal R1 in a high state and the second reset signal R2 in a low state are applied to the second node 320, the third reset signal R3 may indicate the high state.

For another example, when the first reset signal R1 in a low state and the second reset signal R2 in a high state are applied to the second node 320, the third reset signal R3 may indicate the high state.

For another example, when the first reset signal R1 in a high state and the second reset signal R2 in a high state are applied to the second node 320, the third reset signal R3 may indicate the high state.

For another example, when the first reset signal R1 in a low state and the second reset signal R2 in the low state are applied to the second node 320, the third reset signal R3 may indicate the low state.

According to some embodiments, in a case in which the active state of the third reset signal R3 for the latch circuit 200 is defined as a high state, when at least one of the first reset signal R1 or the second reset signal R2 in the high state is applied to the second node 320, the latch circuit 200 may transition to a reset state at a point in time at which the third reset signal R3 in the high state is received.

FIG. 5 is a circuit diagram of a switch control circuit including a logic circuit configured to receive the first reset signal and the second reset signal according to some embodiments. FIG. 5 illustrates only components for describing a switch control circuit 50 including a logic circuit configured to receive the first reset signal and the second reset signal according to some embodiments. The switch control circuit 50 illustrated in FIG. 5 may further include at least one component described above with reference to FIG. 3 or the like.

Referring to FIG. 5, the switch control circuit 50 according to some embodiments may include a second node 320 implemented as a logic circuit 500. That is, the second node 320 illustrated in FIG. 3 or the like may include the logic circuit 500 configured to receive the first reset signal R1 and the second reset signal R2 and output the third reset signal R3. According to some embodiments, the logic circuit 500 may receive the first reset signal R1 and the second reset signal R2 as inputs and output the third reset signal R3.

According to some embodiments, when active states of the reset signals for the timer circuit 100 and the latch circuit 200 are both defined as high states, the logic circuit 500 may be implemented as an OR gate, as shown in FIG. 5. According to some embodiments, when the active states of the reset signals for the timer circuit 100 and the latch circuit 200 are both defined as low states, the logic circuit 500 may be implemented as an AND gate, unlike that shown in FIG. 5.

According to some embodiments, in a case in which the active state of the third reset signal R3 for the latch circuit 200 is defined as a high state, when at least one of the first reset signal R1 in the high state or the second reset signal R2 in the high state is input to the logic circuit 500, the latch circuit 200 may transition to a reset state at a point in time at which the third reset signal R3 in the high state is received.

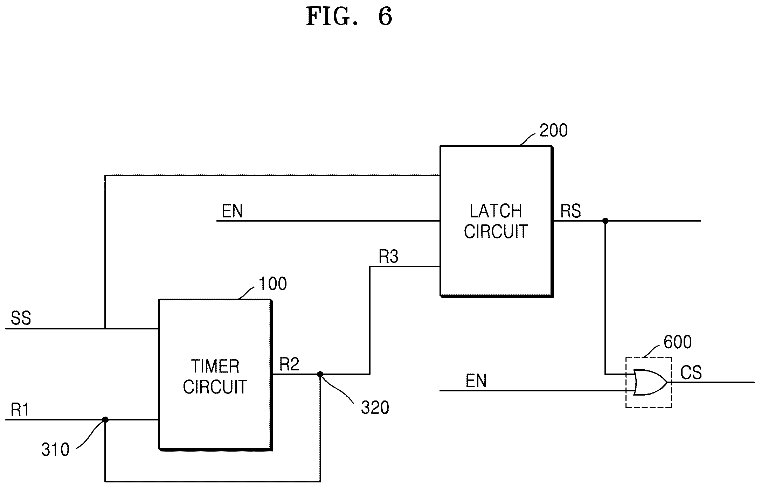

FIG. 6 is a circuit diagram of a switch control circuit including a logic circuit configured to receive the enable signal and the retain signal according to some embodiments.

Referring to FIG. 6, a switch control circuit 50 according to some embodiments may include a logic circuit 600 configured to receive the enable signal EN and the retain signal RS and to output a control signal CS for controlling opening and closing of the switch 20. According to some embodiments, the logic circuit 600 may receive the enable signal EN and the retain signal RS as inputs and output the control signal CS.

According to some embodiments, the enable signal EN input to the logic circuit 600 may represent the enable signal EN generated by the controller 40. For example, the enable signal EN, which is input to the logic circuit 600, may be input to the logic circuit 600 through a signal transmission path formed via a contact point connected to an input terminal of the latch circuit 200.

In the present disclosure, the control signal CS refers to a signal that is directly applied to the switch 20 to control the opening and closing of the switch 20, or applied to the switch driver for the switch 20 to control the opening and closing of the switch 20. According to some embodiments, the control signal CS may control the state of the switch 20 to an ON state or an OFF state. For example, the control signal CS indicating a first state may control the switch 20 to the ON state, and the control signal CS indicating a second state may control the switch 20 to the OFF state.

According to some embodiments, when active states of the enable signal EN, the retain signal RS, and the control signal CS are all defined as high states, the logic circuit 600 may be implemented as an OR gate. For example, when at least one of the enable signal EN in a high state or the retain signal RS in the high state is input, the logic circuit 600 may output the control signal CS in the high state to control the switch 20 to the ON state.

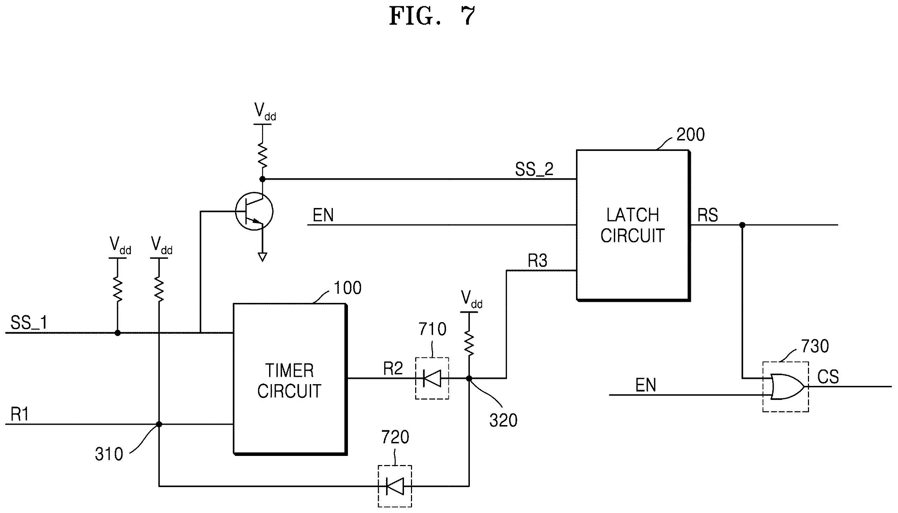

FIG. 7 is a circuit diagram of a switch control circuit according to some embodiments.

FIG. 7 illustrates an example of a section-by-section power supply scheme for implementing a stable switch control circuit 50. In another example, the section-by-section power supply scheme may be modified in various ways, and active states of respective signals for each component of the switch control circuit 50 may be defined differently depending on the power supply scheme. For example, those skilled in the art may adopt a power supply scheme different from that shown in FIG. 7, depending on various technical requirements and application fields.

Referring to FIG. 7, in the switch control circuit 50 according to some embodiments, active states of a safety signal SS_1, the first reset signal R1, and the second reset signal R2 for the timer circuit 100 may be defined as low states.

In the switch control circuit 50 according to some embodiments, active states of a safety signal SS_2, the enable signal EN, and the retain signal RS for the latch circuit 200 may be defined as high states, and an active state of the third reset signal R3 for the latch circuit 200 may be defined as a low state.

According to some embodiments, as the active states of the first reset signal R1, the second reset signal R2, and the third reset signal R3 are defined as low states, diodes 710 and 720 provided in a second section of a first path and in a second path shown in FIG. 7 may be provided in directions opposite to those of the diodes 410 and 420 shown in FIG. 4.

The switch control circuit 50 according to some embodiments may include a logic circuit 730 configured to receive, as inputs, the enable signal EN and the retain signal RS, whose active states are defined as high states, and to output the control signal CS.

The logic circuit 730 according to some embodiments may be implemented as an OR gate. For example, when at least one of the enable signal EN in a high state or the retain signal RS in the high state is input, the logic circuit 730 may output the control signal CS in the high state to control the switch 20 to an ON state.

The switch control circuit 50 may operate in two modes. The modes of the switch control circuit 50 may include a normal operation mode for implementing safe control of the switch 20 in actual situations, and a diagnostic operation mode for verifying whether the switch control circuit 50 operates normally.

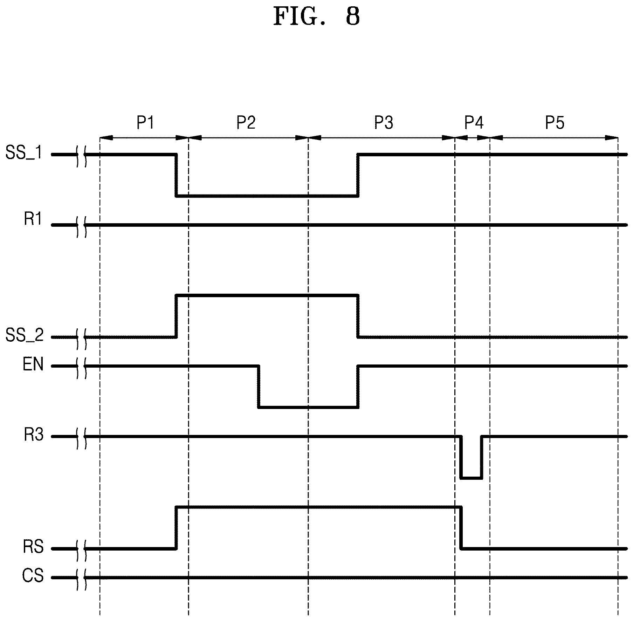

Hereinafter, with reference to FIGS. 8 and 9, operation processes of the switch control circuit 50, in which the active states are defined as in FIG. 7, will be described in more detail according to each mode.

FIG. 8 is an example diagram for describing aspects of the normal operation of the switch control circuit of FIG. 7.

Referring to FIG. 8, the normal operation of the switch control circuit 50 according to some embodiments may be controlled based on the safety signal SS_1 and the enable signal EN.

Until a first time period P1, the safety signal SS_1 in a high state and the enable signal EN in the high state may be applied to the switch control circuit 50. Accordingly, the switch control circuit 50 may output the control signal CS in the high state based on the enable signal EN.

In the first time period P1, the controller 40 may output the safety signal SS_1 in a low state. According to some embodiments, the controller 40 may change the state of the safety signal SS_1 from the high state to the low state based on the occurrence of an abnormality in the controller 40. For example, the auxiliary controller 42 may change the state of the safety signal SS_1 from the high state to the low state based on the occurrence of an abnormality in the main controller 41 (e.g., a reset of the main controller 41).

According to some embodiments, as the state of the safety signal SS_1 output from the controller 40 changes, the safety signal SS_2 input to the latch circuit 200 may change from the low state to the high state. As the safety signal SS_2 in the high state is input to the latch circuit 200, the latch circuit 200 may capture and store the high state indicated by the enable signal EN at a point in time at which the safety signal SS_2 is input, and may output the retain signal RS in the high state.

For example, the state of the signal captured and stored by the latch circuit 200 at the point in time at which the safety signal SS_2 is input may be the state of the control signal CS. To this end, the latch circuit 200 may further include an input port corresponding to the control signal CS.

In a second time period P2, the enable signal EN output from the controller 40 may change from the high state to the low state as a result of the occurrence of the abnormality in the controller 40. For example, the output of the enable signal EN in an active state may be interrupted as the main controller 41 performs an unexpected reset operation.

In this case, the state of the control signal CS may be maintained in the high state by the retain signal RS output from the latch circuit 200, and accordingly, the connection state of the switch 20 may be maintained regardless of the occurrence of the abnormality in the controller 40.

In a third time period P3, as the abnormality in the controller 40 is resolved, the controller 40 may change the state of the safety signal SS_1 from the low state to the high state and may output the enable signal EN in the high state. According to some embodiments, as the state of the safety signal SS_1 output from the controller 40 changes, the safety signal SS_2 input to the latch circuit 200 may change from the high state to the low state.

The latch circuit 200 may maintain the output of the retain signal RS in the high state based on the absence of an input of the third reset signal R3 in an active state. Accordingly, both the enable signal EN and the retain signal RS may indicate the high state, and the control signal CS may also indicate the high state.

In a fourth time period P4, as a preset period of time elapses from a point in time at which the safety signal SS_1 in the low state is input to the timer circuit 100 in the first time period P1, the timer circuit 100 may output the second reset signal R2 in the low state.

As the timer circuit 100 outputs the second reset signal R2 in the low state, the third reset signal R3 in the low state may be input to the latch circuit 200 via the second node 320.

As the latch circuit 200 receives the third reset signal R3 in the low state, the latch circuit 200 may be reset, the stored state of the enable signal EN may be cleared, and the retain signal RS may change to the low state.

According to some embodiments, as the enable signal EN in the high state is normally generated by the controller 40, the control signal CS may be maintained in the high state even when the retain signal RS changes to the low state.

In a fifth time period P5, as the safety signal SS_1 in the high state and the enable signal EN in the high state are applied to the switch control circuit 50, the switch control circuit 50 may stably control the switch 20 as in the time before the first time period P1.

FIG. 9 is an example diagram for describing aspects of the diagnostic operation of the switch control circuit of FIG. 7.

Referring to FIG. 9, the diagnostic operation of the switch control circuit 50 according to some embodiments may be controlled based on the safety signal SS_1, the enable signal EN, and the first reset signal R1.

Until a first time period P1, the safety signal SS_1 in a high state and the enable signal EN in the high state may be applied to the switch control circuit 50. Accordingly, the switch control circuit 50 may output the control signal CS in the high state based on the enable signal EN.

In the first time period P1, the controller 40 may output the first reset signal R1 in a low state. According to some embodiments, the controller 40 may generate the first reset signal R1 in the low state based on a user input instructing the diagnostic operation or a preset condition being satisfied. For example, when the power supply system 1 is implemented as a vehicle system such as an electric vehicle, the preset condition may include the reception, by the controller 40, of a command to shut down vehicle operation.

According to some embodiments, as the controller 40 outputs the first reset signal R1 in the low state, the third reset signal R3 in the low state may be input to the latch circuit 200 via the second node 320. That is, the resetting of the latch circuit 200 may be performed not only through indirect control via the timer circuit 100, but also through direct control without passing through the timer circuit 100.

According to some embodiments, as the first reset signal R1 in the low state is input to the timer circuit 100 and the third reset signal R3 in the low state is input to the latch circuit 200, both the timer circuit 100 and the latch circuit 200 may be reset. This means setting the components of the switch control circuit 50 to a reset state in order to diagnose whether the switch control circuit 50 is operating normally.

In a second time period P2, the controller 40 may output the safety signal SS_1 in the low state. According to some embodiments, the controller 40 may output the safety signal SS_1 in the low state based on the start of the diagnostic operation mode. For example, the auxiliary controller 42 may output the safety signal SS_1 in the low state at a point in time after a certain period of time has elapsed from a point in time at which the main controller 41 outputs the first reset signal R1 in the low state.

In this case, the output of the safety signal SS_1 in the low state does not actually indicate that an abnormality has occurred in the main controller 41, but rather means that the safety signal SS_1 in the low state is artificially output for the purpose of the diagnostic operation.

As the state of the safety signal SS_1 output from the controller 40 changes, the safety signal SS_2 input to the latch circuit 200 may change from the low state to the high state. As the safety signal SS_2 in the high state is input to the latch circuit 200, the latch circuit 200 may capture and store the high state indicated by the enable signal EN at a point in time at which the safety signal SS_2 is input, and may output the retain signal RS in the high state.

In a third time period P3, the controller 40 may change the enable signal EN from the high state to the low state. For example, the controller 40 may stop the output of the enable signal EN based on the start of the diagnostic operation caused by the reception of a command to shut down vehicle operation. According to some embodiments, the controller 40 may also maintain the enable signal EN in the high state.

In this case, the state of the control signal CS may be maintained in the high state due to the retain signal RS output from the latch circuit 200, and accordingly, the connection state of the switch 20 may be maintained regardless of the output of the enable signal EN from the controller 40.

In a fourth time period P4, the latch circuit 200 may maintain the output of the retain signal RS in the high state based on the absence of an input of the third reset signal R3 in an active state. Accordingly, both the enable signal EN and the retain signal RS may indicate the high state, and the control signal CS may also indicate the high state.

In a fifth time period P5, as a preset period of time elapses from a point in time at which the safety signal SS_1 in the low state is input to the timer circuit 100 in the second time period P2, the timer circuit 100 may output the second reset signal R2 in the low state.

As the timer circuit 100 outputs the second reset signal R2 in the low state, the third reset signal R3 in the low state may be input to the latch circuit 200 via the second node 320.

As the latch circuit 200 receives the third reset signal R3 in the low state, the latch circuit 200 may be reset, the stored state of the enable signal EN may be cleared, and the retain signal RS may change to the low state.

According to some embodiments, when the controller 40 stops the output of the enable signal EN in the high state, the control signal CS may change to the low state as the retain signal RS changes to the low state.

The controller 40 may obtain the retain signal RS output from the latch circuit 200. The controller 40 may diagnose whether the switch control circuit 50, which includes the timer circuit 100 and the latch circuit 200, is operating normally based on whether the retain signal RS changes to the high state at the point in time at which the safety signal SS_1 in the low state is output, whether the high state of the retain signal RS is maintained for a preset period of time with respect to the timer circuit 100, and/or whether the retain signal RS changes to the low state after the preset period of time has elapsed with respect to the timer circuit 100.

For example, the controller 40 may diagnose that the switch control circuit 50 is operating normally when the retain signal RS changes to the high state at the point in time at which the safety signal SS_1 in the low state is output, the high state of the retain signal RS is maintained for a preset period of time with respect to the timer circuit 100, and the retain signal RS changes to the low state at a point in time after the preset period of time has elapsed with respect to the timer circuit 100.

In a sixth time period P6, the controller 40 may change the first reset signal R1 to the low state based on the start of the diagnostic operation caused by the reception of a command to shut down vehicle operation. According to some embodiments, as the controller 40 outputs the first reset signal R1 in the low state, the third reset signal R3 in the low state may be input to the latch circuit 200 via the second node 320.

According to some embodiments, as the first reset signal R1 in the low state is input to the timer circuit 100 and the third reset signal R3 in the low state is input to the latch circuit 200, both the timer circuit 100 and the latch circuit 200 may be reset. This means maintaining the switch control circuit 50 in its reset state after the vehicle operation has been shut down, until the vehicle operation is resumed.

In a seventh time period P7, the controller 40 may change the safety signal SS_1 from the low state to the high state based on the completion of the diagnosis of the switch control circuit 50. As the state of the safety signal SS_1 output from the controller 40 changes, the safety signal SS_2 input to the latch circuit 200 may change from the low state to the high state.

It is noted that, unlike the example illustrated in FIG. 9, the diagnostic operation mode may not involve stopping the output of the enable signal EN while the enable signal EN is in the high state during the third time period P3, or changing the state of the first reset signal R1 during the sixth time period P6.

According to some embodiments of the present disclosure, a reset of a latch circuit that maintains a state of a switch can be implemented by a direct control method rather than an indirect control method.

The characteristics of embodiments of the present disclosure are not limited to the above-mentioned characteristics, and other characteristics not mentioned may be more clearly understood by those skilled in the art from the description of the present specification.

The use of all examples terms (for example, and the like) in the present disclosure are to simply describe the present disclosure in more detail, and unless the range of the present disclosure is not limited by the example terms unless limited by the claims.

## Claims

1. A switch control apparatus comprising:
a controller (40) configured to generate a safety signal (SS), an enable signal (EN), and a first reset signal (R1);
a timer circuit (100) configured to receive the safety signal (SS), to further receive the first reset signal (R1) via a first node (310), and to generate a second reset signal (R2); and
a latch circuit (200) configured to receive each of the safety signal (SS) and the enable signal (EN), to further receive a third reset signal (R3) based on at least one of the first reset signal (R1) or the second reset signal (R2) via a second node (320), and to generate a retain signal (RS), wherein in the switch control apparatus, a first path including the first node (310), the timer circuit (100), and the second node (320), and a second path including the first node (310) and the second node (320) are formed, and
the second path is different from the first path.

2. The switch control apparatus as claimed in claim 1, wherein the first path includes a first section connecting the first node (310) to the timer circuit (100), and a second section connecting the timer circuit (100) to the second node (320), wherein the second section includes a first diode configured to prevent the first reset signal (R1) from being input to the timer circuit (100).

3. The switch control apparatus as claimed in claim 2, wherein the second path includes a second diode configured to prevent the second reset signal (R2) from being input to the first node (310).

4. The switch control apparatus as claimed in any one of the preceding claims, wherein the second node (320) includes a first logic circuit configured to receive the first reset signal (R1) and the second reset signal (R2), and to output the third reset signal (R3).

5. The switch control apparatus as claimed in any one of the preceding claims, wherein the controller (40) includes:
a main controller (41) configured to generate the enable signal (EN) and the first reset signal (R1); and
an auxiliary controller (42) configured to generate the safety signal (SS) based on a state of the main controller (41).

6. The switch control apparatus as claimed in any one of the preceding claims, wherein
the first reset signal (R1) is configured to cause the timer circuit (100) to be set to a reset state, and
the third reset signal (R3) is configured to cause the latch circuit (200) to be set to the reset state.

7. The switch control apparatus as claimed in any one of the preceding claims, wherein the timer circuit (100) is further configured to output the second reset signal (R2) at a point in time after a preset period of time has elapsed from a point in time at which the safety signal (SS) is received.

8. The switch control apparatus as claimed in any one of the preceding claims, wherein the latch circuit (200) is further configured to output the retain signal (RS) from a point in time at which the safety signal (SS) is received until a point in time at which the third reset signal (R3) is received.

9. The switch control apparatus as claimed in any one of the preceding claims, further comprising a second logic circuit configured to receive the enable signal (EN) and the retain signal (RS), and to output a control signal for controlling opening and closing of a switch (20).

10. The switch control apparatus as claimed in any one of the preceding claims, wherein the controller (40) is further configured to diagnose the switch control apparatus based on the retain signal (RS).

11. A power supply apparatus comprising:
a power source (10);
a switch (20) configured to electrically connect or disconnect the power source (10) to or from at least one load;
a controller (40) configured to generate a safety signal (SS), an enable signal (EN), and a first reset signal (R1);
a timer circuit (100) configured to receive the safety signal (SS), to receive the first reset signal (R1) via a first node (310), and to generate a second reset signal (R2);
a latch circuit (200) configured to receive each of the safety signal (SS) and the enable signal (EN), to receive a third reset signal (R3) based on at least one of the first reset signal (R1) or the second reset signal (R2) via a second node (320), and to generate a retain signal (RS); and
a first logic circuit configured to receive the enable signal (EN) and the retain signal (RS), and to output a control signal for controlling opening and closing of the switch (20),
wherein in the power supply apparatus, a first path including the first node (310), the timer circuit (100), and the second node (320), and a second path including the first node (310) and the second node (320) are formed, and
the second path is different from the first path.

12. The power supply apparatus as claimed in claim 11, wherein the first path includes a first section connecting the first node (310) to the timer circuit (100), and a second section connecting the timer circuit (100) to the second node (320), wherein the second section includes a first diode configured to prevent the first reset signal (R1) from being input to the timer circuit (100).

13. The power supply apparatus as claimed in claim 12, wherein the second path includes a second diode configured to prevent the second reset signal (R2) from being input to the first node (310).

14. The power supply apparatus as claimed in any one of the claims 11-13, wherein the second node (320) includes a second logic circuit configured to receive the first reset signal (R1) and the second reset signal (R2), and to output the third reset signal (R3).

15. The power supply apparatus as claimed in any one of the claims 11-14, wherein the controller (40) includes:
a main controller (41) configured to generate the enable signal (EN) and the first reset signal (R1); and
an auxiliary controller (42) configured to generate the safety signal (SS) based on a state of the main controller (41).
